Europäisches Patentamt

European Patent Office

Office européen des brevets

(11) Veröffentlichungsnummer: **0 173 903 B1**

# EUROPÄISCHE PATENTSCHRIFT

(45) Veröffentlichungstag der Patentschrift: **27.12.91**

(51) Int. Cl.⁵: **B60R 22/46**

(21) Anmeldenummer: **85110303.6**

(22) Anmeldetag: **17.08.85**

(54) Sicherheitsgurtanordnung.

(30) Priorität: **04.09.84 DE 3432451**

(43) Veröffentlichungstag der Anmeldung:
**12.03.86 Patentblatt 86/11**

(45) Bekanntmachung des Hinweises auf die
Patenterteilung:
**27.12.91 Patentblatt 91/52**

(84) Benannte Vertragsstaaten:
**DE FR GB SE**

(56) Entgegenhaltungen:
**EP-A- 0 093 237**
**DE-A- 3 343 325**
**DE-U- 8 031 785**
**GB-A- 2 082 892**

(73) Patentinhaber: **AUTOFLUG GMBH**
**Industriestrasse 10 Postfach 1180**
**W-2084 Rellingen(DE)**

(72) Erfinder: **Butenop, Klaus, Dipl.-Ing.**
**Obendeich 29**
**W-2209 Herzhorn(DE)**
Erfinder: **Krützfeld, Herbert, Ing. grad.**
**Samlandweg 172**
**W-2000 Hamburg 62(DE)**
Erfinder: **Struck, Klaus, Dipl.-Ing.**
**Olendörp 46**
**W-2000 Hamburg 63(DE)**
Erfinder: **Grassmuck, Jürgen, Dipl.-Ing.**
**Oeltingsalle 27**
**W-2080 Pinneberg(DE)**
Erfinder: **Spranger, Thomas, Dipl.-Ing.**
**Lenzweg 18**
**W-2000 Hamburg 54(DE)**

(74) Vertreter: **Müller, Karl-Ernst, Dr. et al**
**Patentanwälte Becker & Müller Eisenhütten-**
**strasse 2**
**W-4030 Ratingen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Sicherheitsgurtanordnung, insbesondere für Kraftfahrzeuge mit einem Dreipunkt-Sicherheitsgurt mit einem an einem Fahrzeugaufbauteil befestigten selbstsperrenden Gurtaufroller und einer Straffvorrichtung für das Gurtband.

Eine derartige Sicherheitsgurtanordnung mit einem im einzelnen beispielsweise in der DE-A- 28 23 334 beschriebenen selbstsperrenden Gurtaufroller und einer auf die Gurtaufwickelwelle des Gurtaufrollers einwirkenden Straffvorrichtung ist aus der DE-A- 30 40 667 bekannt. Dabei ist der selbstsperrende Gurtaufroller sowohl mit einem gurtband- wie auch fahrzeugsensitiven Blockiersystem ausgestattet, so daß eine Blockierung des Gurtaufrollers sowohl durch schnellen Zug am Gurtband wie auch bei plötzlichen Verzögerungen beziehungsweise Beschleunigungen des Fahrzeugs erfolgt. Hierzu ist ein radial auslenkbares Sperrglied auf der Gurtaufwickelwelle formschlüssig gelagert, welches bei Ansprechen der gurtbandsensitiven Blockierung aufgrund seiner von der gurtbandsensitiven Trägheitsscheibe gesteuerten radialen Auslenkung in eine entsprechend angeordnete gehäusefeste Verzahnung eingreift und so die weitere Drehung der Gurtaufwickelwelle unterbindet. Für die fahrzeugsensitive Blockierung ist am Gurtaufroller ein Sensor eingerichtet, der bei plötzlichen Beschleunigungen beziehungsweise Verzögerungen des Fahrzeuges die Trägheitsscheibe in ihrer Drehung anhält und so ebenfalls die Auslenkung des Sperrgliedes mit Sperrwirkung der Gurtaufwickelwelle herbeiführt.

Die mit einem derartigen Gurtaufroller zusammenwirkende Straffvorrichtung hat die Aufgabe, die am Körper des angeschnallten Fahrzeuginsassen befindliche Gurtlose in den Gurtaufroller vor dessen Blockierung im Unfallgeschehen einzuziehen, und aus diesem Grund wird der pyrotechnisch angetriebene Gurtstraffer durch einen das Unfallgeschehen anzeigenden Sensor ausgelöst, da der Straffvorgang mit Einziehen des Gurtbandes abgeschlossen sein muß, bevor die Vorwärtsverlagerung der angeschnallten Person infolge der vom Aufprall herrührenden Energie einsetzt.

Mit einer solchen bekannten Sicherheitsgurtanordnung ist jedoch der Nachteil verbunden, daß in dem Zeitraum zwischen Beendigung des Straffvorganges und der erst durch die Auszugsbewegung des Gurtbandes im Unfallgeschehen herbeigeführten Blockierung des Gurtaufrollers wieder eine gewisse Gurtlänge aus dem Gurtaufroller freigegeben wird. Eine Freigabe an weiterem Gurtband erfolgt durch den sogenannten Filmspuleneffekt, der sich dadurch erklärt, daß der in mehr oder weniger dichten Windungen bei normalem Betrieb des Gurtaufrollers von der Aufrollfeder oder nach Auslösung der Straffvorrichtung von dieser auf die Gurtaufwickelwelle aufgewickelte Gurt unter Anwendung entsprechender Kräfte noch wesentlich strammer aufgewickelt werden könnte, so daß durch den im Unfallgeschehen auftretenden außerordentlichen starken Zug am Gurtband eine Verdichtung der Gurtwicklung unter gleichzeitiger Freigabe an entsprechender Gurtlänge erfolgen muß.

Der sogenannte Filmspuleneffekt kann durch die aktive Straffung des Sicherheitsgurtes nicht vollständig beseitigt werden, da die von der Straffvorrichtung aufzubringende Straffkraft begrenzt ist, um den angeschnallten Insassen nicht zu verletzen. Weiterhin wird die Straffenergie fast vollständig zur Beseitigung der Gurtlose am Körper benötigt, welche nur unter Überwindung entsprechender Reibung in den Gurtaufroller eingezogen werden kann.

Der Erfindung liegt daher die Aufgabe zugrunde, eine Sicherheitsgurtanordnung der eingangs genannten Gattung derart zu verbessern, daß nach erfolgter Straffung des Gurtbandes im Unfallgeschehen keine Freigabe an Gurtband mehr erfolgen kann, damit eine den angeschnallten Insassen gefährdende Vorwärtsverlagerung weitgehend ausgeschlossen ist.

Die Lösung dieser Aufgabe ergibt sich im wesentlichen daraus, daß zusätzlich eine an dem Fahrzeugaufbauteil zu befestigende und durch die Gurtauszugskraft auszulösende Klemmvorrichtung für das Gurtband vorgesehen ist, welche in Auszugsrichtung des Gurtbandes hinter der Straffvorrichtung angeordnet ist.

Zwar ist die Anbringung einer durch die Gurtauszugskraft auslösbaren Klemmvorrichtung im Rahmen einer Sicherheitsgurtanordnung durchaus bekannt (GB-A-2 082 892), jedoch erfolgt deren Anbringung bisher jeweils ohne gleichzeitigen Einsatz einer Straffvorrichtung. Es besteht nämlich dabei das Problem, daß eine durch Zugkraft am Gurtband auszulösende Klemmvorrichtung auch anspricht und den Gurt klemmt, wenn nach Auslösung einer wirkungsmäßig hinter der Klemmvorrichtung angeordneten Straffvorrichtung diese die Zugkraft auf das Gurtband ausübt. Ferner darf die Klemmvorrichtung nach Beendigung des Straffvorganges schon deswegen nicht ausgelöst sein, weil die Sicherheitsgurtanordnung im Hinblick auf die Blockierung des Gurtauszuges auch dann noch sicher funktionieren muß, wenn die Straffvorrichtung infolge einer Fehlmeldung des sie auslösenden Sensors oder eines sonstigen Systemfehlers ausgelöst worden ist.

Die erfindungsgemäße Lösung dieser Aufgabe ergibt sich aus dem Hauptanspruch; eine vorteilhafte Ausführungsform ist in dem Unteranspruch angegeben.

Die Erfindung sieht vor, daß in Auszugsrichtung des Gurtbandes hinter der Strammvorrichtung eine durch die am Sicherheitsgurt wirkende Gurtauszugskraft auszulösende Klemmvorrichtung für das Gurtband vorgesehen ist und daß zwischen Klemmvorrichtung und Gurtaufroller mit daran gekoppelter Straffvorrichtung ein zweiarmiger Hebel schwenkbar angeordnet ist, der mit seinem einen Arm an der beweglichen Klemmbacke und mit seinem anderen Arm über eine Rolle am Gurtband anliegt.

Mit der Erfindung ist der Vorteil verbunden, daß infolge der Anordnung einer Klemmvorrichtung wirkungsmäßig hinter dem selbstsperrenden Gurtaufroller mit Gurtstraffer der im Blockierfall eintretende Gurtauszug weitgehend vermieden ist. Auf diese Weise wird zunächst die am Körper des angeschnallten Insassen befindliche Gurtlose eingezogen und alsdann der Körper in der am Ende des Straffvorganges erreichten Position festgehalten, ohne daß es im weiteren Unfallgeschehen noch zu einer Freigabe am Gurtband kommt. Die Auslösung der Klemmvorrichtung geschieht dabei in vorteilhafter Weise, indem die im Gurtband wirkende Gurtauszugskraft den zweiarmigen Hebel verschwenkt und damit eine bewegliche Klemmbacke in deren Klemmstellung bringt.

Als weiterer Vorteil tritt hinzu, daß die Sicherheitsgurtanordnung in jedem Zustand, außer nach einer unfallbedingten Auslösung, frei benutzbar und nicht durch gegenseitige Sperrung der Bauteile unbrauchbar gemacht ist. Hierzu ist vorteilhaft, daß die bewegliche Klemmbacke durch eine Feder in ihrer Öffnungsstellung gehalten ist.

In der Zeichnung ist ein Ausführungsbeispiel der Erfindung wiedergegeben, welches nachstehend beschrieben ist. Es zeigen:

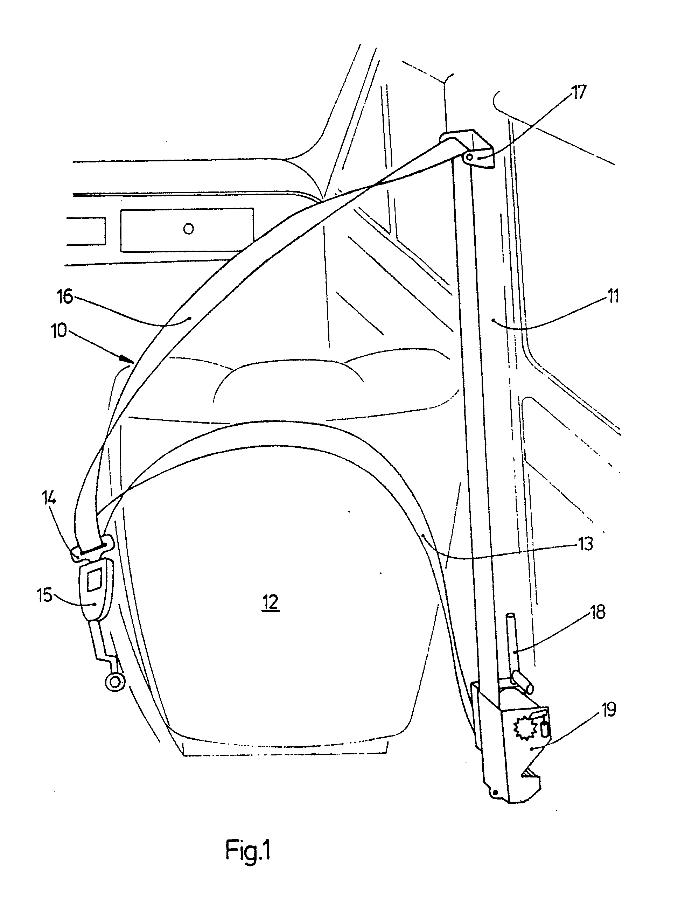

    Fig. 1     eine Sicherheitsgurtanordnung in einer schaubildlichen Ansicht,

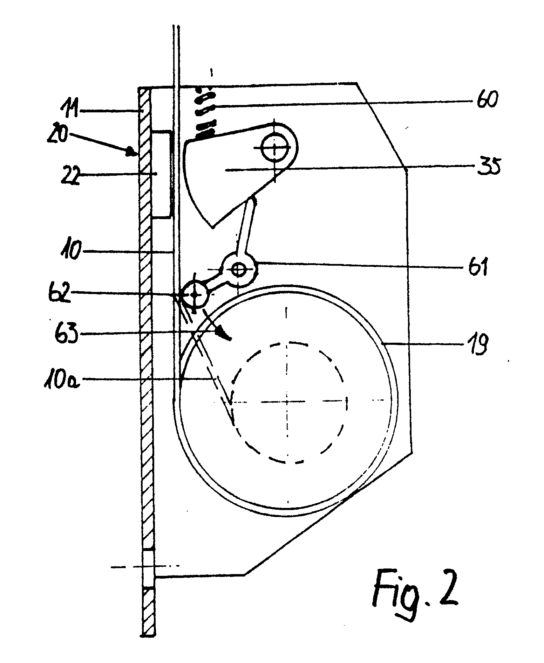

    Fig. 2     den Gurtaufroller mit Klemmvorrichtung in einer Seitenansicht.

Die Sicherheitsgurtanordnung wird gebildet durch einen Dreipunkt-Sicherheitsgurt 10, der an der B-Säule 11 eines Kraftfahrzeuges an der Außenseite eines Fahrzeugsitzes 12 befestigt ist, von dort als Beckengurt 13 über den Sitz zu dessen Innenseite geführt und dort an der Schloßzunge 14 eines Gurtschlosses 15 umgelenkt ist und als Brust- beziehungsweise Schultergurt 16 zurück zum oberen Ende der B-Säule 11 des Kraftfahrzeuges verläuft, wo sich ein Umlenkbeschlag 17 befindet, über den der Gurt nach unten umgelenkt wird und alsdann längs der B-Säule 11 zu einem unten an der B-Säule befestigten Gurtaufroller 19 geführt ist, der seinerseits mit einer Straffvorrichtung 18 gekoppelt ist.

In der Ablaufebene des Gurtbandes 10 vom Gurtaufroller 19 am an der B-Säule 11 befestigten gemeinsamen Gehäuse ist eine Klemmvorrichtung 20 mit einem festen Klemmstück 22 und einer schwenkbaren Klemmbacke 35 angeordnet, zwischen denen das Gurtband 10 geradlinig vom Gurtaufroller 19 herkommend geführt ist. Die Klemmbacke 35 wird dabei durch eine gehäuseseitig abgestützte Druckfeder 60 in der offenen Position entgegen der Abzugsrichtung des Gurtbandes 10 gehalten.

Zwischen der beweglichen Klemmbacke 35 und der Umfangslinie des Gurtaufrollers 19 ist ein zweiarmiger Hebel 61 schwenkbar so angeordnet, daß er in der Öffnungsstellung der Klemmvorrichtung 20 mit einem Hebelarm an der Klemmbacke 35 und mit dem anderen Hebelarm am ablaufenden Gurtband 10 anliegt, wozu am vorderen Ende des Hebels eine Rolle 62 angeordnet ist.

Im Normalbetrieb kann das Gurtband 10 durch die Klemmvorrichtung 20 hindurchgezogen werden, ohne daß diese anspricht, weil die Druckfeder 60 die bewegliche Klemmbacke 35 in Öffnungsstellung hält. Hat sich die anzuschnallende Person mit dem Sicherheitsgurtsystem angeschnallt, so wird entsprechend viel Gurtband 10 vom Gurtaufroller 19 abgewickelt, wodurch sich der Durchmesser des auf dem Gurtaufroller 19 befindlichen Gurtwickels verkleinert und das Gurtband 10a den gestrichelt eingezeichneten Verlauf nimmt. Kommt es nun nach der Strammung des Gurtbandes 10 durch die auf den Gurtaufroller 19 wirkende Straffvorrichtung 18 zu einem Anwachsen der Auszugskraft, so schwenkt die Rolle 62 mit Hebel 61 entgegen der Kraft der Feder 60 längs des Gurtverlaufes 10a nach innen (Pfeil 63), wodurch der Hebel 61 die bewegliche Klemmbacke 35 mit dem Klemmstück 22 in Eingriff bringt. Die Klemmbewegung wird nach Eingriff der Klemmteile 22, 35 durch die weiterhin wirkende Zugkraft am Gurtband 10 selbsthemmend verstärkt.

Außer der geradlinigen Gurtbandführung zeichnet sich diese Klemmungsart dadurch aus, daß eine Straffung des Gurtbandes 10 auch bei anliegender Klemmbacke 35 am Klemmstück 22 möglich ist, wobei bei Bewegungsumkehr und einsetzender Wirkung einer Gurtauszugskraft eine sofortige Klemmung des Gurtbandes 10 erfolgt.

## Patentansprüche

1.   Sicherheitsgurtanordnung, insbesondere für Kraftfahrzeuge, mit einem Dreipunkt-Sicherheitsgurt (10) mit einem an einem Fahrzeugaufbauteil (11) befestigten selbstsperrenden Gurtaufroller (19) und einer Straffvorrichtung (18) für das Gurtband, dadurch gekennzeichnet, daß in Auszugsrichtung des Gurtbandes (10) hinter der Straffvorrichtung (18) eine durch die am Sicherheitsgurt (10) wirkende Gurtauszugskraft auszulösende Klemmvorrichtung (20) für das Gurtband, mit einem festen Klemmstück (22) und einer beweglichen Klemmbacke (35), vorgesehen ist und daß zwischen Klemmvorrichtung (20) und Gurtaufroller (19) mit daran gekoppelter Straffvorrichtung (18) ein zweiarmiger Hebel (61) schwenkbar angeordnet ist, der mit seinem einen Arm an der beweglichen Klemmbacke (35) und mit seinem anderen Arm über eine Rolle (62) am Gurtband (10) anliegt.

2. Sicherheitsgurtanordnung nach Anspruch 1, dadurch gekennzeichnet, daß die bewegliche Klemmbacke (35) durch eine Feder (60) in ihrer Öffnungsstellung gehalten ist.

## Claims

1. Safety belt arrangement, more particularly for motor vehicles, having a three-point safety belt (10) with self-locking belt reeling means (19) secured to a structural part (11) of the vehicle and a tensioning device (18) for the belt, characterised in that a clamping device (20) actuated by the belt withdrawal force acting on the belt (10) is provided for the belt, behind the tensioning device (18) in the direction of withdrawal of the belt (10), having a fixed clamping member (22) and a movable clamping jaw (35), and in that a two-armed lever (61) is pivotally mounted between the clamping device (20) and the belt reeling means (19), with the tensioning device (18) coupled thereto, said lever abutting with one arm on the movable clamping jaw (35) and with its other arm, via a roller (62), on the belt (10).

2. Safety belt arrangement according to claim 1, characterised in that the movable clamping jaw (35) is held in the open position by a spring (60).

## Revendications

1. Dispositif de ceinture de sécurité, en particulier pour véhicules automobiles, avec une ceinture de sécurité à trois points (10), équipée d'un enrouleur de ceinture (11) autobloquant, fixé sur une partie de carrosserie (11) du véhicule, et d'un dispositif tendeur (18) pour le ruban de ceinture, caractérisé en ce que, dans le sens du déroulement par traction du ruban de ceinture (10), un dispositif de serrage (20) pour le ruban de ceinture, équipé d'une pièce de serrage fixe (22) et d'une mâchoire de serrage mobile (35) et se déclenchant au moyen de la force de traction qui agit sur la ceinture de sécurité, est prévu derrière le dispositif tendeur (18), et en ce qu'entre le dispositif de serrage (20) et l'enrouleur de ceinture (19), est disposé pivotant un levier à deux bras (61), auquel le dispositif tendeur (18) est accouplé et qui appuie, par l'un de ses bras, sur la mâchoire de serrage mobile (35) et, par son autre bras, sur le ruban de ceinture (10), par l'intermédiaire d'un galet (62).

2. Dispositif de ceinture de sécurité selon la revendication 1, caractérisé en ce que la mâchoire de serrage mobile (35) est maintenue en position d'ouverture au moyen d'un ressort (60).

Fig.1

Fig. 2